Europäisches Patentamt

European Patent Office

Office européen des brevets

(19)

(11) Veröffentlichungsnummer: **0 284 598**
**A2**

## (12) EUROPÄISCHE PATENTANMELDUNG

(21) Anmeldenummer: 88890066.9

(22) Anmeldetag: 22.03.88

(51) Int. Cl.⁴: **F 16 J 15/34**

(30) Priorität: 24.03.87 AT 702/87

(43) Veröffentlichungstag der Anmeldung:
28.09.88 Patentblatt 88/39

(84) Benannte Vertragsstaaten:
**AT BE CH DE ES FR GB GR IT LI LU NL SE**

(71) Anmelder: **Stöller, Walter**
**Leystrasse 23/14**
**A-1200 Wien (AT)**

(72) Erfinder: **Stöller, Walter**
**Leystrasse 23/14**
**A-1200 Wien (AT)**

(74) Vertreter: **Casati, Wilhelm, Dipl.-Ing. et al**
**Patentanwälte Casati, Wilhelm, Dipl.-Ing. Itze, Peter,**
**Dipl.-Ing. Amerlingstrasse 8**
**A-1061 Wien (AT)**

(54) **Gleitringdichtung.**

(57) Die Erfindung betrifft eine Gleitringdichtung, die durch ein Halteelement, insbesondere eine Schlauchschrumpffolie (13), oder mit einem Kleber auf ihre für den Einbau erforderliche Länge gehalten wird.

Die Befestigung des Gleitringes (10) auf der Welle (1) erfolgt mit einem Klemmring (4), der zwischen der Welle (1) und dem Dichtungsgehäuse (2) durch eine Feder oder ein Federnpaar (7) eingedrückt wird. Die Feder(n) ist bzw. sind dabei während des Einbaues durch ein Halteelement (6), insbesondere einen Klebstoff, in zusammengedrückter Lage gehalten und preßt bzw. pressen nach dem Lösen des Halteelementes (6) den Klemmring (4) in die konische Gehäusebohrung(3), wodurch eine kraftschlüssige Verbindung zwischen dem Dichtungsge-häuse (2) und der Welle (1) hergestellt wird.

FIG 2

EP 0 284 598 A2

**Beschreibung**

Gleitringdichtung

Die Erfindung betrifft eine Gleitringdichtung, bei welcher der Gleitring unter Federbelastung an einem Gegenring dichtend anliegt.

Die Gleitringdichtung kann auch durch ein Halteelement auf ihre für den Einbau erforderliche Länge gehalten werden.

Bei Gleitringdichtungen herkömmlicher Art mit Mitnehmer, Gleitring und Gegenring, erfordert vor allem der Einbau der Dichtung ein aufwendiges Messen an Maschine und Welle, um die Dichtung in richtiger Achsiallage auf der Welle anzuordnen.

Durch die Erfindung soll nun eine Gleitringdichtung der eingangs erwähnten Art so gefaltet werden, daß sie ohne aufwendiges Messen in jede Stopfbüchse eingeführt und in die richtige Axiallage gebracht werden kann, wodurch eine rasche, unkomplizierte Dichtungsmontage gesichert wird.

Erreicht wird dieses Ziel dadurch, daß gemäß der Erfindung bei einer Gleitringdichtung der eingangs erwähnten Art zur Aufnahme der insbes. als Flachfeder(n) ausgebildeten Belastungsfeder(n) des Gleitringes ein Gehäuse mit einer zentralen, konischen Bohrung für den Durchtritt der Welle vorgesehen ist, daß zur drehschlüssigen Verbindung des Gehäuses mit der Welle ein, wie an sich bekannt, eine konische Außenfläche aufweisender Klemmring und mindestens eine Feder, insbesondere eine Tellerfeder vorgesehen ist, die gegen den Klemmring und einen gehäusefesten Anschlag oder einen in Richtung der Achse der Bohrung des Gehäuses begrenzt bewegbaren Anschlag abgestützt ist, wobei die mindestens eine Feder den Klemmring in die konische Bohrung des Gehäuses drückt, und daß ein lösbares Halteelement, insbesondere ein Klebstoff, für die mindestens eine Feder des Klemmringes vorgesehen ist, welches die mindestens eine Feder (während des Einbaues) in komprimiertem Zustand zwischen dem Anschlag und dem Klemmring hält.

Durch diese Ausgestaltung der erfindungsgemäßen Gleitringdichtung kann das Gehäuse in die richtige Lage (Axiallage) auf der Welle gebracht werden, da der Klemmring durch das Halteelement gehindert wird, in die konische Bohrung unter der Wirkung der mindestens einen Feder einzudringen und dadurch das Gehäuse an der Welle zu fixieren. Sobald die gewünschte Stelle erreicht ist, die das Gehäuse auf der Welle einnehmen soll, wird das Halteelement dazu veranlaßt, die mindestens eine Feder freizugeben, wodurch der Klemmring in die konische Bohrung des Gehäuses gedrückt wird und das Gehäuse an der Welle festhält. Wird als Halteelement Klebstoff verwendet, so wird vor dem Einbau der Gleitringdichtung ein Lösungsmittel auf das Halteelement aufgebracht; die Zeit, die das Lösungsmittel braucht, um den Kleber zu lösen, steht zur Verfügung, um das Gehäuse in die gewünschte Lage auf der Welle zu bringen. Nachdem das Lösungsmittel den Klebstoff gelöst hat, kommt die mindestens eine Belastungsfeder des Klemmringes frei und drückt diesen in die konische Bohrung des Gehäuses, wodurch das Gehäuse fest mit der Welle verbunden ist.

Erfolgt die Belastung des Klemmringes durch mehrere Federn, so können diese durch den das Halteelement bildenden Klebstoff zu einer Scheibe zusammengeklebt werden.

In konstruktiv einfacher Weise kann der Anschlag für die mindestens eine Belastungsfeder des Klemmringes gegebenenfalls auch für die den Gleitring belastenden Flachfedern von einem in das Gehäuse eingeschraubten Stützring gebildet werden. Es kann hiefür jedoch auch ein in Umfangsrichtung elastischer Ring vorgesehen werden, der in eine Ringnut des Gehäuses, ähnlich einem Seegerring, eingelegt wird.

In besonderer Ausgestaltung der erfindungsgemäßen Gleitringdichtung können zur Bildung des in axialer Richtung begrenzt bewegbaren Anschlages für die mindestens eine Belastungsfeder des Klemmringes auch die Flachfedern herangezogen werden, welche den Gleitring in axialer Richtung belasten. Es kann hiefür auch ein zwischen den Belastungsfedern von Klemmring und Gleitring eingelegter Stützring Verwendung finden. Dieser bildet mit seinen Stirnflächen eine einwandfreie Anlage für die einander zugekehrten Enden der Belastungsfedern des Gleitringes und des Klemmringes.

Ist als Halteelement für die mindestens eine Belastungsfeder des Klemmringes ein Klebstoff vorgesehen, so wird ein Lösungsmittel zur Beseitigung der Haltekraft verwendet. Hiebei ist es vorteilhaft, wenn zur Einbringung eines Lösungsmittels für den das Halteelement der Feder bildenden Kleber, am Umfang des Gehäuses eine Bohrung vorgesehen ist.

Um ein komplettes, einbaufertiges Aggregat, enthaltend das Gehäuse, den Gleitring und den Gegenring zu erhalten und das Expansionsbestreben der Belastungsfeder des Gleitringes zu behindern, kann in besonderer Ausgestaltung der Erfindung das Gehäuse durch eine außen am Gehäuse anliegende Schlauchschrumpffolie mit dem Gegenring zu einer Einheit verbunden werden, wobei die Schlauchschrumpffolie mit einem Aufreißelement, z.B. einer sich axial erstreckenden Stahldrahtschlaufe versehen ist. Nach dem Einbau in die Stopfbüchse kann mittels des Aufreißelementes die Schlauchschrumpffolie in axialer Richtung aufgeschnitten werden und dann aus dem Spalt zwischen Gehäuse und Stopfbüchseninnenwand herausgezogen werden.

Die Erfindung wird nachstehend anhand von in der Zeichnung dargestellten Ausführungsbeispielen näher erläutert: Es zeigen

Fig. 1 einen Achsialschnitt durch ein Stopfbüchsengehäuse mit eingesetzter, jedoch noch nicht in Betriebszustand befindlicher Gleitringdichtung,

Fig. 2 einen Schnitt entsprechend Fig. 1, jedoch von einer gegenüber Fig. 1 modifizierten Ausführungsform und

Fig. 3 eine in Betriebszustand befindliche Gleitringdichtung, entsprechend der Ausführungsform gemäß Fig. 2.

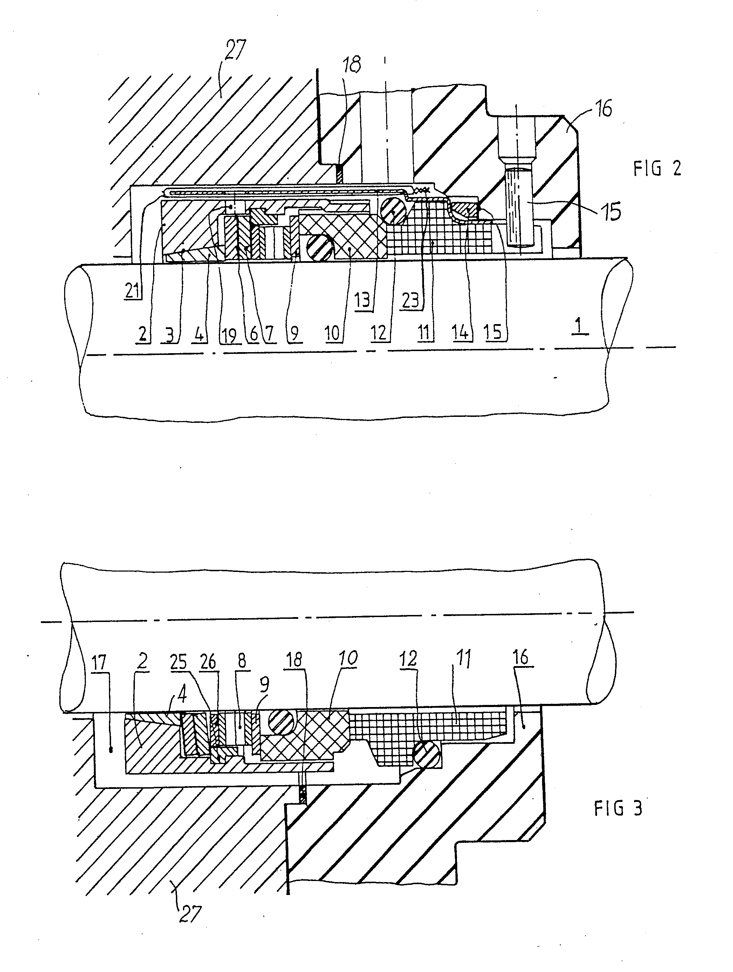

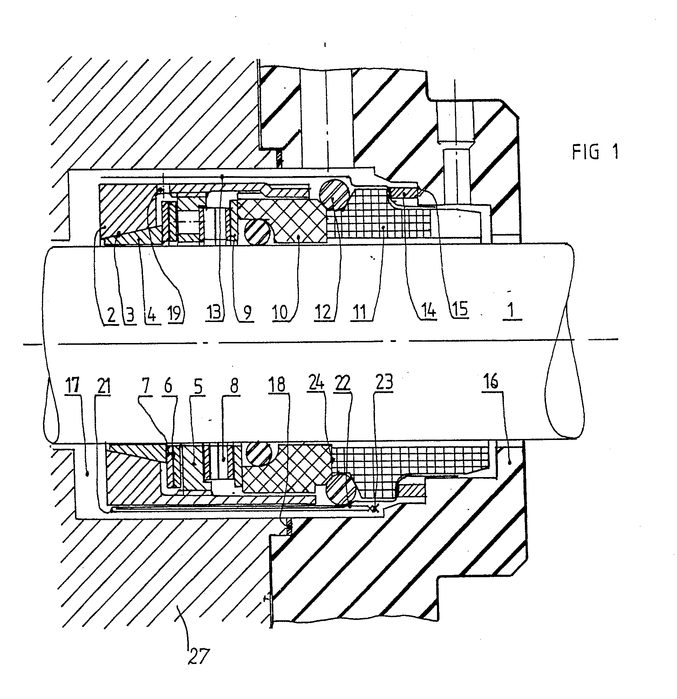

Auf einer Welle 1 sitzt eine Gleitringdichtung, deren Gehäuse 2, das den Mitnehmer bildet, eine konische Wellenbohrung 3 aufweist, in der ein ringförmiger elastischer keilförmiger Klemmring 4 in ungepreßtem Zustand anliegt. Zwischen der größeren Stirnfläche des Klemmringes 4 und einem in das Gehäuse 2 eingeschraubten Stützring 5 ist mindestens eine Feder 7 oder ein Federpaar angeordnet, das durch ein Halteelement 6, z.B. Klebstoff, in zusammengedrücktem Zustand gehalten ist und so am Klemmring 4 anliegt, diesen jedoch in axialer Richtung nicht belastet. An der dem Klemmring 4 abgewandten Seite des in das Gehäuse 2 eingeschraubten Stützringes 5 liegt eine Flachfeder 8 an, die über einen Druckring 9, den Gleitring 10, der drehschlüssig mit dem Gehäuse 2 verbunden ist, an einen Gegenring 11 drückt, der im eingebauten Zustand mittels eines Bolzens 15, gegen Drehen in der Dichtungsbrille 16 gesichert, gehalten wird (Fig. 2).

Die Expansionsfähigkeit der Flachfeder 8 kann dadurch limitiert werden, daß am Außenmantel der Gleitringdichtung 10, 11 ein aufgeschrumpfter Schrumpfschlauch 13, oder dergleichen Halteelement anliegt, wodurch die gesamte Dichtung auf ein vorgeschriebenes, gegenüber dem Betriebsmaß verkürztes Einbaumaß gehalten ist. Ein Distanzring 14 zwischen der Dichtungsbrille 16 und dem Gegenring 11 gewährleistet beim Einbau die Plazierung des Gehäuses 2 und damit des Gleitringes 10 auf der Welle 1, wenn die Gleitringdichtung mittels der Dichtungsbrille 16 als Einheit auf die Welle 1 aufgeschoben wird, soweit, bis die Dichtungsbrille 16 an der Dichtfläche 18 des Stopfbüchsengehäuses 27 anliegt.

Soferne als Halteelement 6 für die mindestens eine Belastungsfeder 7 des Klemmringes 4 Klebstoff verwendet wird, wird vor dem Einführen der Dichtung in die Stopfbüchsenbohrung 17 durch eine Bohrung 19 im Gehäuse 2 ein den Klebstoff 6, der die Belastungsfeder 7 des Klemmringes 4 zusammengedrückt hält, lösendes Mittel auf die Feder 7 und den Stützring 5, bzw. einen Anschlag 25 für die Feder 7, aufgebracht. Durch das Lösungsmittel wird die Haltekraft des Klebstoffes 6 verringert, sodaß schließlich die Feder 7 expandiert und den Klemmring 4 in die konische Bohrung 3 des Gehäuses 2 preßt, wodurch eine kraftschlüssige Verbindung zwischen Welle 1 und Gehäuse 2 hergestellt ist und die Drehung der Welle 1 über das Gehäuse 2 auf den drehschlüssig mit dem Gehäuse 2 verbundenen Gleitring 10 übertragen wird. Um den Schrumpfschlauch 13 durchtrennen zu können, ist ein dünner Aufreißstahldraht 21 in Reckrichtung des Schrumpfschlauches eingelegt und durch ein Loch im Schrumpfschlauch von innen nach außen bis etwa in die Mitte des Gegenringes 11 geführt, wo die beiden Enden durch Rödeln 23 miteinander verbunden sind.

Der Stahldraht 21 bildet solcherart eine Schlinge, in der die Schlauchfolie 13 liegt, sodaß durch Ausüben eines Zuges auf die Schlinge in achsialer Richtung die Schlauchfolie 13 entlang einer Erzeugenden aufgetrennt werden kann. Zwischen dem Gleitring 10 und dem Gegenring 11 ist eine O-Ringdichtung 12 eingelegt. Nach dem Auftrennen der Schrumpffolie 13 mittels des Stahldrahtes 21 kann die Schrumpffolie zwischen der Dichtungsbaugruppe und der Stopfbüchsenbohrung 17 bei abgenommener Dichtungsbrille 16 herausgezogen werden.

Nach Entfernen des geschlitzten Distanzringes 14 vom Gegenring 11 wird die O-Ringdichtung 12 an die Stelle, die der Distanzring 14 zuvor eingenommen hat, auf den Gegenring 11 aufgezogen, wonach die Dichtungsbrille 16 auf dem Stopfbüchsengehäuse 27 mittels Schrauben befestigt wird, derart, daß die Brille 16 an der Dichtfläche 18 des Stopfbüchsengehäuses 27 anliegt, dabei wird die O-Ringdichtung 12 gepreßt und der Gegenring 11 gegen den Gleitring 10 gedrückt.

Es ist auch eine Ausführungsform möglich, bei der sich die Belastungsfeder 7 für den keilförmigen Klemmring 4 und die Flachfeder 8 für die Belastung des Gleitringes 10 gegeneinander abstützen, gegebenenfalls unter Zwischenschaltung eines in axialer Richtung beschränkt beweglich gelagerten Stützringes 26, der einen (begrenzt) beweglichen axialen Anschlag bildet (Fig. 2, 3), der auch ein Öffnen des mehrteiligen Ringes 25 verhindert, der ebenfalls einen Anschlag für die Belastungsfedern bilden kann. Im Betriebszustand drückt dann bei dieser Anordnung die Belastungs-Flachfeder 8 den Gleitring 10 auf den Gegenring 11, der im Gehäuse 2 undrehbar gelagert ist, und die Belastungsfeder 7 stützt sich am Innenring 25 einerseits und dem konischen Klemmring 4 andererseits ab und drückt den Klemmring in die konische Bohrung 3 des Gehäuses 2.

Beim Einbau der Dichtung kann wie folgt vorgegangen werden: Vor dem Einführen der Dichtung in die Stopfbüchsenbohrung 17 wird - soferne als Halteelement 6 für die mindestens eine Belastungsfeder des Klemmringes 4 Klebstoff verwendet wird - Lösungsmittel auf das Halteelement aufgebracht und die mittels des Schrumpfschlauches 13 auf das Einbaumaß gehaltene Gleitringdichtung in die Stopfbüchsenbohrung 17 eingeführt.

Beim Einführen wird die komplette Gleitringdichtung mit dem Gegenring 11 voran in die vom Stopfbüchsengehäuse 27 abmontierte Dichtungsbrille 16, unter Zwischenschaltung des Distanzringes 14, eingelegt und dann in die Stopfbüchsenbohrung 17 soweit eingeschoben, bis die Stopf büchsenbrille 16 am Stopfbüchsengehäuse (Dichtfläche 18) ansteht.

Das vor dem Dichtungseinbau aufgebrachte Lösungsmittel mindert die Haltekraft des Klebstoffes, sodaß nach einiger Einwirkungszeit die mindestens eine Feder 7 expandiert und dabei den Klemmring 4 in den von der konischen Bohrung 3 des Gehäuses 2 gebildeten Sitz preßt, wodurch die Welle 1 mit dem Gehäuse 2, welches den Mitnehmer für den Gleitring 10 bildet, kraftschlüssig verbunden ist. Nun kann die Dichtungsbrille 16 wieder entfernt werden und der den Schrumpfschlauch als Schlinge einschließende Aufreißdraht 21 abgezogen werden, wodurch die Schrumpffolie 13 in axialer Richtung zerschnitten wird. Sie kann daher einwandfrei aus dem Spalt zwischen Dichtungsbrille 16 und Stopfbüchsengehäuse 27 herausgezogen werden. Der Gegenring 11 liegt nach Abziehen der Dichtungsbrille 16 vom Stopfbüchsengehäuse frei, sodaß eine O-Ringdichtung 12, über die sich der Gegenring 11 an der Dichtungsbrille 16 abstützt, auf den Gegenring 11 aufgezogen werden kann, wonach dann die Dichtungsbrille 16 mittels Schrauben am Stopfbüchsengehäuse 27 befestigt wird, wobei der Gleitring 10 an den Gegenring 11 federnd (mittels der Federn 8) angepreßt wird.

**Patentansprüche**

1. Gleitringdichtung, wobei der Gleitring unter Federbelastung an einem Gegenring dichtend anliegt, dadurch gekennzeichnet, daß zur Aufnahme der insbesondere als Flachfeder(n) ausgebildeten Belastungsfeder(n) (8) des Gleitringes (10) ein Gehäuse (2) mit einer zentralen, konischen Bohrung (3) für den Durchtritt der Welle (1) vorgesehen ist, daß zur drehschlüssigen Verbindung des Gehäuses (2) mit der Welle (1) ein, wie an sich bekannt, eine konische Außenfläche aufweisender Klemmring (4) und mindestens eine Feder (7), insbesondere eine Tellerfeder vorgesehen ist, die gegen den Klemmring (4) und einen gehäusefesten Anschlag (5, 25) oder einen in Richtung der Achse der Bohrung (3) des Gehäuses (2) begrenzt bewegbaren Anschlag (26) abgestützt ist, wobei die mindestens eine Feder (7) den Klemmring (4) in die konische Bohrung (3) des Gehäuses (2) drückt, und daß ein lösbares Halteelement (6), insbesondere ein Klebstoff, für die mindestens eine Feder (7) des Klemmringes (4) vorgesehen ist, welches die mindestens eine Feder (7) (während des Einbaues) in komprimiertem Zustand zwischen dem Anschlag (5, 25, 26) und dem Klemmring (4) hält.

2. Gleitringdichtung nach Anspruch 1, dadurch gekennzeichnet, daß der Anschlag (5) für die mindestens eine Belastungsfeder (7) des Klemmringes (4) und/oder für die Flachfedern (8), die den Gleitring (10) belasten, als in das Gehäuse (2) eingeschraubter Stützring ausgebildet ist (Fig. 1).

3. Gleitringdichtung nach Anspruch 1, dadurch gekennzeichnet, daß der Anschlag (25) für die mindestens eine Belastungsfeder (7) des Klemmringes (4) und/oder die Flachfedern (8), die den Gleitring (10) belasten, von einem in eine Ringnut des Gehäuses (2) eingelegten, in Umfangsrichtung elastischen Ring gebildet ist (Fig. 2 und 3).

4. Gleitringdichtung nach Anspruch 1, dadurch ge kennzeichnet, daß der in Richtung der Achse der Gehäusebohrung (3) begrenzt bewegbare Anschlag (25) für die mindestens eine Belastungsfeder (7) des Klemmringes (4) von den Flachfedern (8), die den Gleitring (10) belasten, oder von einem Stützring (26) gebildet ist, der zwischen der mindestens einen Belastungsfeder (7) des Klemmringes (4) und den Flachfedern (8) für die Belastung des Gleitringes (10) angeordnet ist und an dem sich einerseits die Flachfedern (8) des Gleitringes (10) und andererseits die mindestens eine Belastungsfeder (7) des Klemmringes (4) abstützen (Fig. 2 und 3).

5. Gleitringdichtung nach einem der Ansprüche 1 bis 4, dadurch gekennzeichnet, daß zur Einbringung eines Lösungsmittels für den das Halteelement (6) der Feder (7) bildenden Kleber, am Umfang des Gehäuses (2) eine Bohrung (19) vorgesehen ist (Fig. 1, 2 und 3).

6. Gleitringdichtung nach einem der Ansprüche 1 bis 5, dadurch gekennzeichnet, daß das Gehäuse (2) durch eine außen am Gehäuse (2) anliegende Schlauchschrumpffolie (13) mit dem Gegenring (11) zu einer Einheit verbunden ist, wobei die Schlauchschrumpffolie (13) mit einem Aufreißelement, z.B. einer sich axial erstreckenden Stahldrahtschlaufe (21) versehen ist (Fig. 1, 2, 3).

0284598

FIG 2

FIG 3

0284598

FIG 1

2  3  4  19    13  9  10  12  11    14  15    1

17  21    7  6  5  8    18  24  22  23    16

27